# EUROPEAN PATENT APPLICATION

(11) **EP 2 824 935 A1**
(43) Date of publication of application: **14.01.2015**
(21) Application number: 14173131.5
(22) Date of filing: 19.06.2014
(51) Int. Cl.: H04N 21/4147, H04N 21/433, H04N 21/845

(54) **Broadcast data receiving apparatus and method**

(30) Priority: 08.07.2013 GB 201312215
(71) Applicant: Pace Plc, Saltaire Shipley West Yorkshire BD18 3LF (GB)
(72) Inventor: Corby, Steven, Bingley, Yorkshire BD16 3QA (GB)
(74) Representative: Wood, Graham

(57) **Abstract**

The invention relates to apparatus and a method for the selective storage of portions of data which are to be used in the subsequent generation of at least first and second programmes from the data. If it is identified that the first and second programmes which are to be stored are shown in sequence on the same channel a decision is made not to store a portion of data which includes data common to that which would be required to be stored for both programmes. This allows the same tuner to be used to obtain the data for both programmes and thereby save on required storage space and reduce the tuner capacity required.

## Description

The invention to which this application relates is apparatus and a method which allows for the receipt and storage of digital data for subsequent retrieval. The data can be stored in response to a user selection and be subsequently available for retrieval to allow a television or radio programme which is to be generated from the said data to be provided to the user in whole whilst also reducing the quantity of data from the received data stream which is required to be stored and/or reducing the apparatus requirements.

The invention relates particularly, although not necessarily exclusively, to apparatus which is provided for the receipt of digital data which is transmitted from one or more locations such as by satellite, cable and/or terrestrial broadcast systems. The data is received in one, or a number, of transport streams by numerous broadcast data receiver apparatus at different geographical locations. The broadcast data receiver apparatus includes means to allow the received data to be processed and provided as a range of television, radio programmes and/or auxiliary services to the users of the apparatus. The user can interact with the apparatus to select which of the services they wish to use and, for example, the particular television or radio programmes that they wish to view and/or listen to. In certain apparatus the selection made is to view or listen to the selected service at that instant in time, in which case the required data is obtained and processed in order to provide the service. In some forms of the apparatus there may be provided a storage facility which is integrated with the apparatus, or connected thereto, such that a selection which can be made by the user is to select a particular service for which the data can be retrieved and processed and then be saved in the storage means. The data which is stored can be retrieved from the storage means at a later time by the user interaction with the apparatus in order to allow the data to be processed from the storage means at that time and the stored programme provided by the apparatus to the user at that time.

In practice, when a user selection is made to store a particular programme, the apparatus will identify the data which is required to allow the programme to be generated and store that data. In addition and, in order to take into account any variation between the expected time of the broadcast and the actual time at which the broadcast data is available to be stored, portions of data before and after the portion of data from which the selected programme is generated are also stored. These additional portions of data are known as guard intervals and this means that if, for example, the programme starts earlier than scheduled, the data for the start of the programme will still be stored as it will be part of the start guard interval portion of data, or, if the program finishes later than expected the data for the end of the program will still be stored as it will be in the end guard interval portion of data. This therefore ensures that schedule variation can be taken into account and the data for the full selected program is still stored and available for selection subsequently.

In broadcast receiver apparatus there is always pressure on the cost of the same so that it is common for the apparatus to be limited to two tuners, which allows a first tuner to be used to generate the programme which is being watched at that time and the second tuner is available to obtain data and pass the same to the storage means for a user selected programme at the same time. Alternatively, both tuners can be used to obtain data for selected programmes and pass the same to the storage means so that both programmes can be stored.

However, if a user selects to store first and second programmes which are to be provided sequentially on the same channel, say BBC1, then a first tuner would be used to retrieve and store the data for the first of the programmes including the start and end guard interval portions of data and the second tuner could be used to retrieve and store the data for the second programme including the start and end guard intervals for that programme. However, if at the time of storing the data for the start guard interval for the second programme the second tuner is already being used to retrieve data for a third programme, either for recording or direct viewing, a conflict occurs as the end guard interval for the first programme will overlap with the start guard interval for the second programme. If a third tuner was available then this could be used to retrieve and store the start guard interval for the second programme but in most cases a third tuner is not available due to cost and/or size constraints of the broadcast data receiver apparatus. This therefore means that, in practice, the user will be presented with a command to cancel the storage of one of the first, second or third programmes due to the conflict, which is frustrating to the user and especially so when it will appear to the user, who is normally unaware of the storage of the guard interval portions of data, that the storage and/or viewing of the three programmes should be possible due to the schedule broadcast times that they are aware of, typically watching one channel whilst recording another.

The aim of the present invention is to provide apparatus and a method which allows the improved processing and storage of data for user selected programmes in a manner which allows the more efficient use of the apparatus and reduces or eliminates the possibility of conflict between programmes which have been selected to be viewed and/or for which data is to be retrieved and stored.

In a first aspect of the invention there is provided a broadcast data receiving apparatus, said apparatus including at least one tuner and at least one storage means and data processing means to allow received data for a selected programme to be selectively retrieved, viewed and/or listened to as a programme via display means and/or speakers connected to the apparatus, and/or stored in the storage means in response to instructions received from at least one user interacting with the apparatus and wherein when stored, the data for the selected programme is stored as a series of data portions including a first portion of data representing at least part of a start guard interval for the programme, a second portion of data representing all or part of an end guard interval for the programme and at least one further portion of data representing all or part of the programme itself and including data intermediate said first and second portions of data.

Typically, the storage means is provided as an integral part of, or in connection with, a receiving apparatus which is capable of receiving broadcast data from any or any combination of satellite, cable or terrestrial broadcast systems.

Typically, the further portion of data is that data which, from the schedule information, represents the data from which the selected programme is to be generated.

In accordance with the invention if the user selects to store two programmes which are scheduled sequentially on the same television or radio channel the second portion of data relating to the guard interval for the end of the first program or the first portion of data relating to the guard interval for the start of the second program is not stored and these portions will have the same data and therefore only one of the two portions needs to be stored. This in turn means that the same tuner can be used to retrieve the data for the first and second programmes and no further tuner is required to be used.

In a further embodiment, the said one of the overlapping portions which is stored is referred to as the end guard interval for the first programme and the start guard interval for the second programme rather than the conventional approach if storing the two separate portions for the respective programmes and this thereby avoids the conflict in the recording of the programmes.

In one embodiment, the data for the stored programme is constructed, when retrieved from the storage medium, by combining a plurality of portions which are defined as being required in order to allow the particular programme to be viewable.

In a further aspect of the invention there is provided a method for storing broadcast data relating to one or a plurality of television and/or radio programmes which can be generated from said data, said method comprising the steps of storing the data for a first programme as a plurality of successive portions, storing the data for a second programme as a plurality of successive portions, identifying the channel on which the said first and second programmes are located and, if the said first and second programmes are generated one after the other on the same channel, selecting to store only one of a portion, or set of successive portions, which contains data for forming an end guard interval of the first programme and a portion, or set of successive portions, which contains data for forming a start guard interval of the second programme and referring to the data of the selected stored portion, or set of successive portions, when generating both the first and second programmes.

Typically the method includes identifying the said stored portion, or portions, of data as being usable as the end guard interval of the first programme and the start guard interval of the second programme.

The provision of the allocation of the said same portion, or portions, of data to both first and second programmes, thereby avoids the need for duplication of storage of that data and the accompanying memory and processing demands of concurrently storing and, in turn, the need for first and second tuners to be allocated to the obtaining of the data for the first and second programmes as now the same tuner can be used for both.

Typically, the method which is used is an adaptive method and takes into account the requests for data storage as and when they are made by the user and then allocates the portion of data on an adaptive basis.

A specific embodiment of the invention is now described with reference to the accompanying drawings.
Figure 1 illustrates apparatus in accordance with which the invention of this application can be used; and
Figure 2 illustrates in a schematic manner one embodiment of the invention in use by illustrating the operating system which is used in the receiver in order to react to a user selection to view programmes and to retrieve and, where necessary, store, the relevant data.

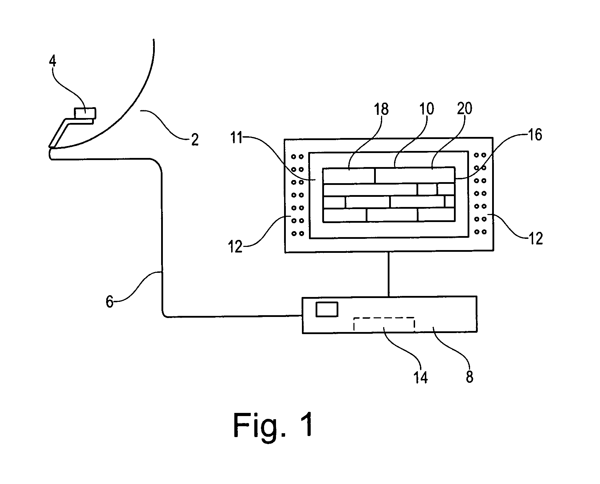

Referring firstly to Figure 1, there is illustrated apparatus 2 for receiving, storing and presenting broadcast data. In this case, the broadcast data is received via a satellite transmission system by an antenna 2 and a low noise block 4 at a premises. This apparatus is, in turn connected, via cables 6 to a broadcast data receiver apparatus 8 within the premises at which the data is processed and, when selected can be used to generate video and/or audio to be presented to the user via a display screen 10 and speakers 12.. The broadcast data receiver includes therein, processing means to allow the data to be processed into a format so that the same can viewed, via the display screen 10 connected thereto and/or listened to via speakers 12 such as those provided as part of a television set. The apparatus also includes at least two tuners which can be selectively controlled to tune to and receive the appropriate frequency and transponder at which the data for a selected programme is transmitted to the broadcast data receiver. This then allows the appropriate data to be obtained for processing. In addition, the broadcast data receiver apparatus includes storage means 14 such as a hard disk, and onto which selected data from that data which is received at the broadcast data receiver apparatus 8, can be stored and then be available at a subsequent time for retrieval and be presented to the user as will now be described.

In operation, a user can interact with the broadcast data receiver 8, typically via a conventional remote control device and/or via interactive buttons provided on the receiver, in order to select to view and/or listen to one of a range of programmes from a range of channels which they wish to view at that time and/or select to store in the storage medium 14 data representing a particular program or programs which the user wishes to store and make available for retrieval and viewing at a later time.

Typically, in order to allow a more efficient and user friendly interaction and control and selection of the apparatus by the user, an electronic programme guide (EPG) 16 can be displayed on the screen 10. This EPG typically comprises a grid with a series of cells located therein, with each row 11 of cells representing a particular channel and each of the cells 18 representing a programme which is available to be selected to be viewed at that time or at some time in the future. The EPG therefore provides an indication of those programmes which are available to be viewed, the channels on which the same are provided and the scheduled times at which the same are to be shown. The user can then interact via their remote control device and select to view and/or store specific programmes. While the current invention is primarily directed towards the occurrence of a user selecting to watch first and second programmes represented by cells 18, 20 which are shown in sequence on the same channel such as, for example, programme 18 and programme 20 which are shown on the electronic programme guide 16 shown on display screen 10 in Figure 1, it should be appreciated that the invention can be utilised for any request which was made for the storage of data relating to a particular programme.

When a user chooses a particular programme and the data for the same is to be stored for subsequent retrieval and display, the data which is retrieved by a tuner includes data for the programme itself and data which precedes the scheduled start time of the programme and data which succeeds the scheduled end time of the programmes so as to provide a "guard interval" of data which can take into account variation in the actual start and end times of the programme and still ensure that the data for the whole of the selected programme is captured and stored.

If, for example, the user has chosen to store data which allows the generation of consecutively shown programmes 18 and 20 of Figure 1, then conventionally, because the programmes are shown in sequence, and hence the data for the same is streamed to the broadcast data receiver sequentially, there will be provided portions of data which are required to be stored concurrently, i.e. the data which is to be stored after the scheduled end time of the first programme 18 and the data which is to be stored preceding the scheduled start time of the second programme 20. Conventionally this would be addressed by controlling a first tuner provided in the broadcast data receiver apparatus to tune to and obtain the data for storage for programme 18 and controlling a second tuner to tune to and obtain the data for storage for programme 20 on the storage medium. This is because both programmes 18 and 20, would be recorded so that the data for the scheduled time period of the selected programme plus data for the start and end guard intervals before and after the scheduled programme time is stored and thereby ensure that all the necessary data for the programme is obtained and any scheduling changes can be taken into account. However, the need to use two tuners, is problematic in that if both tuners are used then, as these will typically be the only two tuners in the apparatus, so the apparatus can then not be used to view or record other programmes at that time.

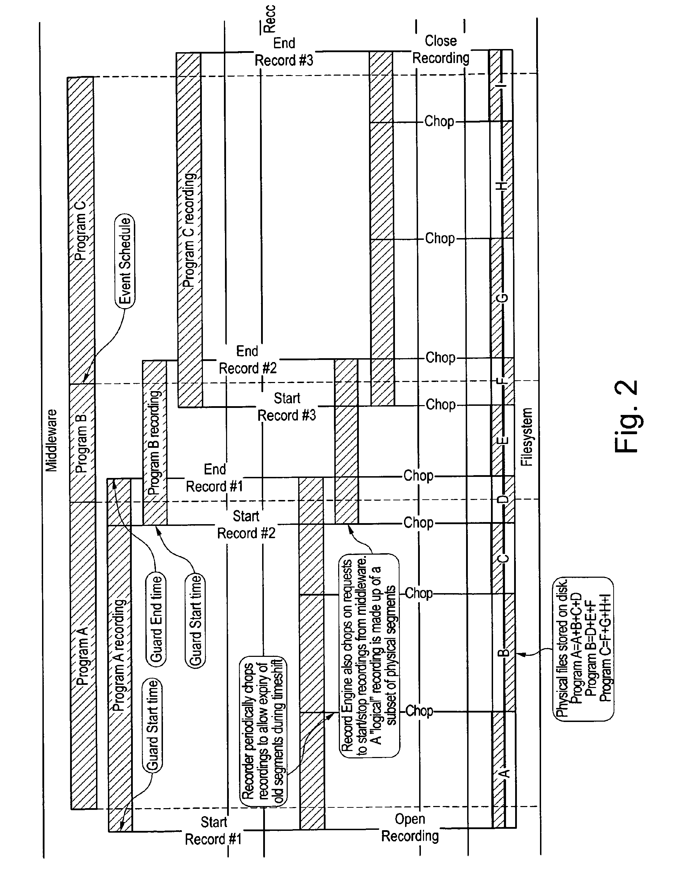

In accordance with the invention, this problem is overcome by reference to the apparatus and method of storage as illustrated in the diagram of Figure 2 which shows the sequence which occurs when programmes A (equivalent to programme 18), B ( equivalent to programme 20) and C, which are all provided on the same channel, one after the other, are selected to be stored by the user and the use of the apparatus and method of the invention in relation to the same.

In accordance with the invention, the data for the programme A is stored in a series of portions, Portion A which includes the start guard interval data and data for the start of the programme A, portion B which includes the data for the middle of the programme A, portion C which includes the data up to the end of the programme A and portion D which includes the end guard interval data for the programme A.

In accordance with the invention, the control system for the apparatus, identifies that the start guard interval for the programme B overlaps with the end guard interval for the programme A. As the programmes A and B are on the same channel the data for the respective end guard interval and the start guard interval is the same. This means that the portion D data can be used to provide the start guard interval data and data for the start of programme B and therefore there is no need to obtain and store the start guard interval data for programme B separately. This, in turn, means that there is no need to tune a second tuner for that purpose as the first tuner can be used continuously. Thus, the same tuner can be used throughout to record programmes A, B and also for programme C where the same process is repeated with regard to the start guard interval data for programme C and the end guard interval data for programme B, which is contained within the portion F.

This therefore means that when the user makes a selection to view and/or listen to the stored programme A and it is necessary to retrieve the data from the storage medium to allow programme A to be viewed, then the portions of data A+B+C+D can be retrieved from the storage medium file and processed, in order, to allow the video and/or audio to be generated and hence all the necessary data is available for programme A, including the start and end guard interval data. If the user selects to watch programme B, then the portions of data D + E + F are retrieved and processed to allow all of the data required for programme B, including the start and end guard interval data to be available and, for programme C, the portions of data F+ G+H+I are retrieved to ensure that all of the data for programme C is available, including the start and end guard interval data.

In a further feature of the invention, the control system for the apparatus and method of the invention is provided to partition the data for a programme into portions at regular intervals and adapts the location of the partitioning of the portions to take into the identified, coincident guard intervals.

It is found that the regular partitioning of the data into portions is also of benefit when providing a finite review buffer of data. As files which represent the regular portions of data become older then the size allocated to the review buffer memory can now be discarded. A record is kept of which files comprise the review buffer and this is updated. Conventional systems that use a single file for the review buffer would need to regularly modify the file start and manage the associated storage elements, hence requiring a detailed and system specific understanding of the underlying storage system.

It will therefore be appreciated that in accordance with the invention, there is provided a means of ensuring that all of the data for respective programmes, including start and end guard interval data, can be obtained, stored and subsequently retrieved for viewing and/or listening to in an efficient and cost effective manner without any noticeable deterioration to the service provided to the user with regard to the stored programmes whilst allowing an increase in the possible services which can be accessed by the apparatus provided to the user in comparison to the conventional operation of the apparatus.

## Claims

1. A broadcast data receiving apparatus, said apparatus including at least one tuner and at least one storage means and data processing means to allow received data for a selected programme to be selectively retrieved, viewed and/or listened to as a programme via display means and/or speakers connected to the apparatus, and/or stored in the storage means in response to instructions received from at least one user interacting with the apparatus and wherein when stored, the data for the selected programme is stored as a series of data portions including a first portion of data representing at least part of a start guard interval for the programme, a second portion of data representing all or part of an end guard interval for the programme and at least one further portion of data representing all or part of the programme itself and including data intermediate said first and second portions of data.

2. Apparatus according to claim 1 wherein the storage means is provided as an integral part of, or in connection with, a receiving apparatus which is capable of receiving broadcast data from any or any combination of satellite, cable or terrestrial broadcast systems.

3. Apparatus according to claim 1 wherein the further portion of data is that data which, from the schedule information, represents the data from which the selected programme is to be generated.

4. Apparatus according to claim 1 wherein when a user selects to store two programmes which are scheduled sequentially on the same television or radio channel one of the second portion of data relating to the guard interval for the end of the first program or the first portion of data relating to the guard interval for the start of the second program is stored and the other of said portions is not stored.

5. Apparatus according to claim 4 wherein the apparatus includes a tuner for retrieval of data to form the said portions and said tuner is used to retrieve the data for the first and second programmes and no further tuner is required to be used.

6. Apparatus according to claim 4 wherein the said portion which is stored acts as the end guard interval for the first programme and the start guard interval for the second programme.

7. Apparatus according to claim 1 wherein the apparatus retrieves the data for the selected programme from the storage medium by identifying and combining a plurality of portions which are defined as being required in order to allow the selected programme to be generated.

8. A method for storing broadcast data relating to one or a plurality of television and/or radio programmes which can be generated from said data, said method comprising the steps of storing the data for a first programme as a plurality of successive portions, storing the data for a second programme as a plurality of successive portions, identifying the channel on which the said first and second programmes are located and, if the said first and second programmes are generated one after the other on the same channel, selecting to store only one of a portion, or set of successive portions, which contains data for forming an end guard interval of the first programme and a portion, or set of successive portions, which contains data for forming a start guard interval of the second programme and referring to the data of the selected stored portion, or set of successive portions, when generating both the first and second programmes.

9. A method according to claim 8 wherein the method includes identifying the said selected stored portion, or set of successive portions, of data as being usable as the end guard interval of the first programme and the start guard interval of the second programme.

10. A method according to claim 8 wherein the same tuner is used to obtain the data for the first and second programmes and any further programmes which are provided in sequence on the same channel.

11. A method according to claim 8 wherein the method is adaptive and takes into account the requests for data storage as and when they are made by the user and then selects which of the portions of data to store.

12. A method according to claim 8 wherein when a user selects to store two programmes which are scheduled sequentially on the same television or radio channel one of the data relating to the guard interval for the end of the first program or the data relating to the guard interval for the start of the second program is stored and the other of said portions is not stored.

13. A method according to claim 8 wherein the stored portions of data are retrieved and processed for a particular, user selected programme in sequence.

14. A method according to claim 8 wherein the same tuner is used to obtain data for the sequential programmes on the same channel.

15. A method according to claim 8 wherein the said portion or set of successive portions which is selected to be stored provides data which can be used as the end guard interval for the first programme and the start guard interval for the second programme such that the same portion or set of successive portions is retrieved and processed when the first or second programme is selected by the user.
